# EUROPEAN PATENT APPLICATION

(11) **EP 2 474 971 A1**
(43) Date of publication of application: **11.07.2012**
(21) Application number: 10195287.7
(22) Date of filing: 16.12.2010
(51) Int. Cl.: G10K 11/16, C08L 95/00, G10K 11/162, G10K 11/168

(54) **Constrained-layer damping material**

(71) Applicant: Autoneum Management AG, 8406 Winterthur (CH)
(72) Inventor: Stopin, Gilles, 60430, Silly Tillard (FR); Tessé, Céline, 61130, Saint Martin du Vieux Bellême (FR)
(74) Representative: van Adrichem Geisseler, Johanna

(57) **Abstract**

Constrained-layer damping material comprising of at least a bitumen material, a binder material and a tackifier characterised in that the bitumen material is a soft grade bitumen with a penetration of at least 150 dmm and a Ring & ball softening point of > 35°C.

## Description

### Technical Field

The present invention is directed to a vibration damping material for use in a constrained damping system and to a constrained layer damping product for damping noise in automotive applications.

### Background Art

Vibration damping materials are widely used in automotive applications to dampen the vibration and sounds of road noise and the engine. For damping materials viscoelastic materials are preferred. The damping effect, linked to the energy dissipated in the viscoelastic material, increases with the increase of the Young modulus and of the loss factor of the viscoelastic material. Of course it also increases in relation to the subjected deformation of the material. There are materials with a very high loss factor but a low Young modulus that provide limited damping to a metal plate, and other materials with a high Young modulus but a relatively low loss factor (like rubber), that are also not very good as dampers. Good damping materials provide a compromise between Young modulus and loss factor.

Since in viscoelastic materials the Young modulus decreases with temperatures and the loss factor has a peak in function of temperature, there is a temperature window where the damping effect on a metal plate (called the composite damping) has a peak. Dampers are designed to have this peak fitting to the application temperature.

There are two main principles of damping: the free layer damping (FLD) and the constrained layer damping (CLD).

In FLD, the main deformation in the viscoelastic material is strain caused by bending of the metal sheet, normally the structural part that is prone to vibration due to sound waves. The amount of energy dissipated increases with the thickness, for a given damping material. Therefore these materials tend to be rather thick. The Young modulus is also typically rather high.

In CLD, the main deformation in the viscoelastic material is in shear, because the material is sandwiched between two stiffer plates (structure and aluminium constraining layer) that are displaced along their planes during the vibration. A thin layer of viscoelastic material can be used because the shear deformation is much bigger than the tensile deformation of the FLD. The material is also typically softer than in FLD to ensure that there is a big jump between the stiffness of the metal sheets and the damping, ensuring a high shear force. The fact that the deformation is very large compensates for the low Young modulus. If the material is too stiff, then the strain deformation is too low. Of course the damping effect increases with increase of the damping factor of the viscoelastic material.

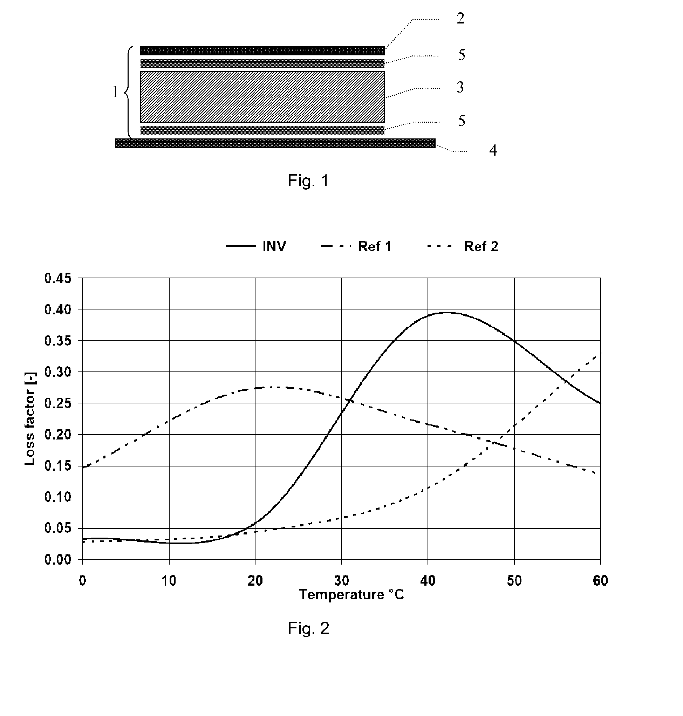

Stiffer structures, like car body panels, require constrained- layer damping. Constrained-layer damping consists of a constrained damping material (3) between a structural base layer (4) and a constraining layer (2) (figure 1). Both the structural base layer and the constraining layer are effectively working as constraining layers. For constrained layer damping the method of attaching the layers does not matter as long as adequate surface contact and coupling occurs. However adhesives (5) if needed should have high shear stiffness, as softer adhesives will not adequately transfer shear strain to the middle-damping layer.

The constrained layer damping material in combination with a metal sheet as the constraining layer is applied to selected parts or areas of the vehicle, forming the base structural layer of the constrained damping system, to prevent vibrations and noise from being transmitted inside the vehicle to the passenger compartment. A problem forms the fact that many of the surfaces to be treated with this type of damping system are not horizontal, but in the vertical direction, sloping or even up-side down. This means that the adhesive function of the part or of the additional adhesive layer must work against gravity. The adhesive should therefore have little or no slow creep or flow characteristics with age.

Typically, materials for the constrained layer comprise of thermoplastic or rubber materials, which are capable of suppressing vibrations and sounds.

Bitumen based damping material is cheaper than rubber based material but has the disadvantage, that it is not auto adhesive.

Bitumen are normally characterised by a combination of penetration, softening point and viscosity and can be divided in following classes of material:
● Penetration grade bitumen is obtained from fractional distillation of crude oil. The lightest fraction are vapours i.e. butane and propane, heavier fractions are taken off the column for gasoline production, then kerosene, then gas oil, the heaviest fraction are high molecular weight hydrocarbons. These heavy hydrocarbons, which are called long residue, are further distilled in a vacuum distillation column to produce gas oil, distillates and short residue. The short residue is the feed stock for producing over 20 grades of bitumen, these are classified by their penetration index typically PEN values of 10 to 330 dmm, this is the distance in tenth millimetres that a needle penetrates the bitumen under a standard test method. Penetration grade bitumen are characterised by penetration and softening point.
● Oxidised bitumen are characterised by softening point and penetration, eg 85/40 is oxidised bitumen with a softening point of 85 and a penetration of 40. Oxidised bitumen is obtained by further processing the short residues. They are semi blown or fully blown with air to increase their molecular weight.
● Hard grade bitumen are characterised by their softening point and penetration but are only designated by the softening point range e.g. H80/90.

Experience has shown that for the use in sound deadening panels in vehicles penetration or PEN grades give better damping characteristics than oxidised grades. However it is common believe that 15-pen is to brittle, whereas 50-pen and higher pen grades are too soft, producing panels that flow during storage. The bitumen is positioned on the vehicle body panels to be dampened, subjected to heat (around 140°C), whereupon they must conform to the shape of the body panel under their own weight and adhere strongly. Typical composition is (% of mass):
● Bitumen (25 pen) 25 ―30%
● Polymer (like APP, EVA etc) 0-5%
● Fibre 3-5%
● Filler (like limestone, clay, mica etc) 60-70%. (MORGEN ET AL. Shell Bitumen Industrial Handbook. Thomas Telford, 1995.)

A common method of applying of vibration damping material is to provide it in the form of a sheet or tape including an adhesive layer, which adheres the damping material to the desired substrate such as an automobile body panel or interior panel. However this requires the vibration damping material be laminated to at least one pressure sensitive adhesive layer, or heat activated adhesive layers.

It is well known that the optimal time for installing these damping sheets is prior to curing the exterior surface paint of the vehicle, which typically occurs in a bake oven that can reach temperatures in excess of 190°C. As such the ability of the adhering material of the sheet must be able to withstand such intense temporary temperatures. It has been found that thermoplastic resin based adhesives do not provide adequate adhesive strength after the heat bake process due to loss of mechanical properties as temperatures increase.

As such it is well known that heat activated adhesives, such as thermosetting adhesives, are preferred wherein the adhesive's activation point can be appropriately modified, based upon the temperature of the heat bake process. Such adhesives thus have the ability of withstanding the temperatures typically found in the heat bake process, while maintaining the requisite adhesive strength. However, the laminate must somehow be temporarily attached to the metallic medium in the interim until the adhesive is properly activated.

US 3243374 disclose the use of a ferrite powder within a bitumen-based noise and vibration-damping sheet to allow preliminary positioning of the sheet during assembly together with a heat activated adhesive. At application and before the adhesive is heat activated the sheet is held on its place magnetically.

An alternative is the use of auto adhesive damping material; currently there are two main materials on the market, one material composite based on bitumen and one based on rubber.

Constrained damper layer material can be made of a combination of bitumen and a tackifier, like hydrocarbon resin, to obtain an auto adhesive damper material. Normally two grades of bitumen, a 20/30 pen grade bitumen which has a penetration between 20-30 dmm and a ring& ball softening around 55°C and a blown bitumen with a penetration between 35-40 dmm and a ring & ball softening around 100°C are used to produce the damper material. The dampers manufacturers do this mix on side, so two different bitumen materials are stored into separate tanks and mixed together during the preparation of the damper, in order to increase the melting temperature of the final damper. However, the blown type of bitumen becomes a niche product for the big oil companies and it is increasingly difficult to obtain the bitumen material to make the dampers.

Bitumen layer with hydrocarbon resin can be used without the need for curing as the resin is already mixed in the bitumen. Hydrocarbon resin, the tackifier used is no longer allowed insight the passenger area of the car due to the high level of VOC (Volatile organic compounds).

US 6828020 discloses an example of a butyl rubber type of damping material. Butyl rubber constrained layer material was developed for the building industry and is now commonly used in the damping of automotive body panels. The production and the raw materials are expensive. In particularly, the mixing of the ingredients needs a high shear stress mixer and is therefore an energy consuming process. Nowadays the material developed for the building industry is also used for the vehicle applications. Not all auto adhesive butyl damping material is able to withstand the curing temperatures, the aluminium foil tends to delaminate or start sliding during the curing. The butyl damping material currently on the market for automotive applications have partly been modified in order to support a curing temperature of 190°C.

These self-adhesive or auto-adhesive damping materials are produced in sheet form with an aluminium foil as constraining layer on one site and a release paper on the opposite site of the sheet. After releasing the paper, the adhesive material is directly applied to the panel to be dampened, without the need of additional adhesive layers.

### Summary of invention

It is the goal of the current invention to obtain a damping material that can be used as a constrained layer in a constrained layer damper, that is comparable in acoustic properties with the materials currently on the market and that is using more readily available raw materials. Preferably the damping material is self adhesive, so there is not need for additional adhesive layers. So it is the object of the invention to obtain an alternative damping material that can be used as the constrained layer in constrained layer damping (CLD).

Surprisingly, it was found that a soft bitumen with a penetration of at least 150 dmm and a Ring & ball softening point of > 35°C as claimed can be used as a constrained layer in a constrained layer damping (CLD).

The constrained-layer damping material according to the invention comprises of at least a bitumen material and a binder material characterised in that the bitumen material is a soft grade bitumen with a penetration of at least 150 dmm and a Ring & ball softening point of > 35°C, preferably the bitumen material is a 160/220 pen grade bitumen. As this bitumen is commonly used for roads it is readily available on the market in great quantities. Other bitumen with comparable physical properties can be used as well. The bitumen takes around 20 to 40% of the total weight of the damping material. Whereas the binder takes between 45 and 70% of the total weight. If not stated otherwise, the % given is always % of the total weight of the final damping material

As a binder material at least one of chalk, powdered limestone, mica, rubber or latex type of materials, or fibrous materials, like polyester fibres, cellulose fibres or wood fibres can be used. Advantageously, a combination of chalk and a cohesive binder, like fibres and/or latex is used. The cohesive binder of at least one of fibres, a polymer, latex or synthetic rubber comprises between 1.5 and 6% of the total weight.

The damping material can either be used together with adhesive layers to obtain the CLD or in addition a tackifier can be add to the damping material, for instance at least one of magnetic particle fillers or a resin.

The resin of the invention may include resin selected from the group consisting of rosin, ester gum, tall oil, esters of rosin, hydrogenated rosin, esters of hydrogenated rosin, reaction products from rosin and maleic anhydride, and reaction products from rosin and phenol. The esters of rosin may be formed from the reaction of rosin with alcohol, wherein the alcohol is selected from the group consisting of methyl alcohol, dipropylene glycol, glycerine, and pentaerythritol, or mixtures thereof.

As a tackifier resin a rosin derivate is preferably used. Surprisingly, it was found that by combining a grade bitumen of 160/220 pen with a small amount of rosin or colophon the bitumen kept the softness necessary for a constrained layer, is auto adhesive and stable over time and over a temperature range normal for the use of these type of products in cars. The behaviour of the material is comparable with that of the optimised butyl rubber based damping material and can replace this more expensive material in the same applications. The rosin is up to 8% of the total weight of the damping material, preferably between 0 and 6%. At least between 2 and 8% weight of a resin, is used to obtain a self-adhesive damping material.

Preferably, the rosin derivate is at least one of methyl ester of rosin or the methyl ester of hydrogenated rosin, or the triethylene glycol ester of rosin or the triethylene ester of hydrogenated rosin. Advantageously, a rosin derivate that is a viscous liquid at the processing temperature is used. The hydrogenated versions of rosin are more preferred, as they have higher viscosity. 0% of resin can be used in those cases where an alternative adhesive system is chosen like magnetic particles or adhesive glue layers.

Other additives not directly related to the properties as discussed might be added, for instance mixing or processing aids like Calcium Oxide.

For the constraining layer a stiff layer preferably a metal layer preferably aluminium or steel can be used. Other constraining layers, like Glass mats, fleece materials or carton can also be used for specific application. The thickness of the layer is normally between 0,05 and 0,2 mm. In a special case the combination of the damping material together with an underbody panel as the constraining layer and the vehicle bottom plate as the structural part can be used as a constrained layer damper according to WO 2008/098395.

The damping material thus obtained can be used as a constrained layer in a constrained layer damper CLD. In case an auto adhesive mixture is used a release paper can be used on the opposite site of the constraining layer, to prevent sticking during storage and transport, until the product is applied to the structural part to be dampened. The material according to the invention can be used on horizontal and vertical parts of a vehicle. Due to the material combination the bitumen damping material is not running and stable over the temperature range for application and during use. Furthermore the damping properties are above 0.1 in the frequency range of interest. Although there is no need for a temperature-curing step the material can be applied to the vehicle body before the curing of the paint without any remarkable effect on the adhesion or the damping properties of the material, in particularly it does not diminish these properties. However it can also be applied later on in the assembling process of the car.

### Measurement methods

The adhesive properties were measured using the FINAT test method FMT2 for peel adhesion (90°) at 100 mm/minute. This test is sued to compare the adhesive response of different laminates. Measuring peel adhesion at 90° normally gives a lower value than at 180° and allows values to be measured for materials normally giving paper tear. Peel adhesion is the force required to remove pressure sensitive coated material applied to a standard test plate, from the plate at a specified angle and speed. Adhesion was measured 24 hours after application being considered the ultimate adhesion. Test strips used were 25 mm wide and had a length of 190 mm in the machine direction. The machine was set at 100mm per minute jaw separation rate. The peel adhesion (90°) given is the average result for the strips tested in Newton's per 25mm width. The test was repeated at different test temperatures.

For the measurement of the damping loss properties of the reference samples and the material according to the invention the ISO 6721-3 was used. The samples were measured on the Carrousel equipment commercially available from Rieter Automotive systems.

### State of the art reference samples

As reference 1 a state of the art butyl damping material T255 AL15 as sold by the company Olin is used. This is an alu-butyl adhesive tape sold with release paper. According to the product description this material is a viscoelastic butyl with a damping performance over a temperature range of between - 30 to 80°C, however it should be applied to the basic structural part between 5 and 40°C. It has a total area weight of 2.9 kg/m² , a total thickness of 1.7mm and a density of between 1.4 and 1.7. The aluminium has a thickness of 150 µm.

Reference 2 was made using the normally used 20/30 hard grade bitumen. The material was made with around 27 % Bitumen 20/30, Chalk around 57% and cohesive binders, fibres, CaO and latex up to around 6%.

In the stickiness test damping material used as a reference, that were not self-adhesive were used together with an adhesive glue layer as indicated in figure 1. Either one or both glue layers were used. As a glue layer, a commercial available acrylic adhesive of the company Adesia was used.

### Example damping material according to the invention

The example damper material according to the invention (INV) was made with:
● Bitumen 160/220 pen grade around between 30% and 35% by weight
● Binder: CaCO₃ between 55 and 60% by weight together with cellulose fibres around 2% by weight and synthetic latex around between 2.4 and 2.6% by weight
● Rosin was used as indicated; if nothing is indicated around 4% by total weight was used.

As bitumen a 160/220 road bitumen from Unipetrol was used with a penetration of 160 to 220mm and a Ring and Ball Softening point of between 35 and 43°C. This material has a breaking point of -15°C and a softening point of 12°C.

As resin the methyl ester of rosin was used, for instance Granolite.

The specific weight percentage was optimised for each sample to obtain a stable product. Where necessary additional additives were added for processing reasons like handling, drying of the bitumen etc. These additives are known in the art and do not have a direct influence on the damping performance of the material.

For the measurement of the CLD properties both bitumen materials were baked on to prevent glue layers from interfering with the data obtained. The constrained construction was in both cases realized with 0.2 mm Aluminium foil. The butyl damper was measured without baking. The adhesion being an intrinsic property of this material.

### Brief description of drawings

Figure 1: schematic representation of a constrained layer damper (CLD)

Figure 2: the loss factor of the damping material according to the invention in comparison to reference material.

Figure 3: the stickiness of the damping material in relation to the amount of rosin used.

Figure 1 shows a basic constrained-layer damping (CLD) consisting of constrained damping material (3) between a structural base layer (4) and a constraining layer (2) (figure 1). For constrained layer damping the method of attaching the layers does not matter as long as adequate surface contact and coupling occurs. In case the material contains magnetic particles or is auto-adhesive no additional glue layers are necessary. However optional adhesive layers (5) if used should have high shear stiffness, as softer adhesives will not adequately transfer shear strain to the middle-damping layer. The constraining layer (2), the constrained layer (3) and if needed the glue layers (5) together form the constrained layer damping product that can be sold to the car industry for instance. If glue layers are used, the surface of the outer layer of the glue layer that will be attached to the structural base layer, ergo the vehicle body part, can have a release paper to prevent the material from unwanted sticking during transport. Auto-adhesive constraining layers, like for instance the reference 1 material don't need additional glue layers.

Figure 2 shows the loss factor measured for constrained layer damping systems with either one of the reference materials (Ref 1, Olin and Ref 2 20/30 Bitumen) or the material according to the invention (INV) as the constrained layer material in this case with 0% rosin.

The new constrained layer material according to the invention shows overall a better performance as the reference materials. As a vehicle is normally heated up in most areas up to around 30°C during driving, the peak of the loss factor in the range of 30-50°C is optimal for this type of applications, even better than those of the reference samples.

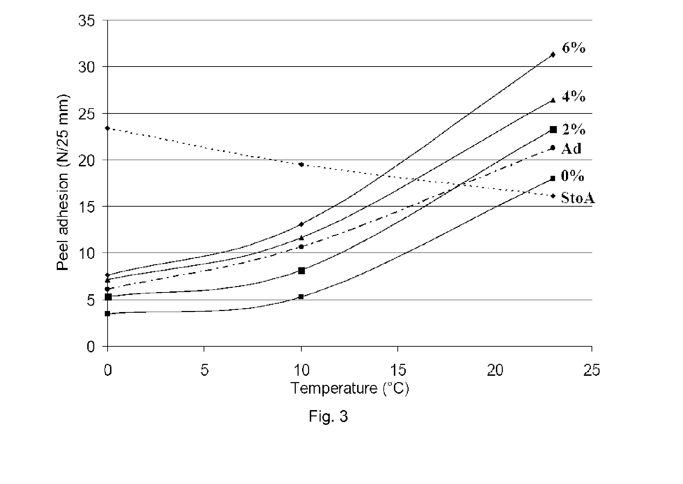

The peel adhesion of samples of the bitumen damper according to the invention with 0 to 8 % Rosin were compared with the adhesion of a state of the art adhesive layer (Ad) and reference 1 the state of the art butyl damping material (StoA). Figure 3 shows the result of the measurement after 24 hours at the given temperature.

At 23°C already the bitumen damping material with 0% rosin according to the invention shows enough self-adhesiveness in comparison to the butyl reference (StoA) and the adhesive glue layer reference. However at lower temperatures the adhesiveness at 0% is lower than both. The adhesiveness of the glue layer is accepted in the industry for use over the whole temperature range in a vehicle and therefore a rosin weight percentage of at least around 4% would be comparable with the adhesiveness of adhesive material currently on the market. However the actual preferred adhesiveness and therefore the weight of rosin needed is dependent on the specific requirements of the place in the vehicle and the specification of the vehicle producer. In horizontal position the adhesiveness of the 0% is enough to keep placed damper in position.

The butyl damping material shows an adhesive failure, this means that the damping material tends to delaminate from the aluminium constraining layer or from the structural car part. This is a less favourable failure as a cohesive failure where the break occurs insight the damping material, as is the case for the damping material according to the invention. It is therefore more easy to adjust the needed adhesiveness dependent on the product specific requirements.

The constrained damping material on the basis of bitumen 160/220 pen grade is against the dogma of the skilled person in the art a true alternative to the more expensive special bitumen mixtures currently used. By using a rosin or colophon resin it is possible to create a constrained layer material that is not only behaving better than the currently used materials but also is auto adhesive. As rosin is not affecting the VOC values, the alternative damper material can be used insight the passenger compartment without health risks.

## Claims

1. Constrained-layer damping material comprising of at least a bitumen material, a binder material and a tackifier **characterised in that** the bitumen material is a soft grade bitumen with a penetration of at least 150 dmm and a Ring & ball softening point of > 35°C.

2. Damping material according to claim 1, wherein the bitumen material is 160/220-pen grade bitumen.

3. Damping material according to one of the preceding claims, wherein the binder material is at least one of chalk, powdered limestone, mica, synthetic latex, or fibers, like cellulose fibres.

4. Damping material according to one of the preceding claims, wherein the tackifier is at least one of magnetic particle fillers or a resin.

5. Damping material according claim 4, wherein the resin is a rosin derivate that is a viscous liquid at the processing temperature,

6. Damping material according claim 5, wherein the rosin derivate is at least one of methyl ester of rosin or the methyl ester of hydrogenated rosin, or the triethylene glycol ester of rosin or the triethylene ester of hydrogenated rosin.

7. Damping material according to claim 4, 5 or 6 wherein the rosin is up to 8% of the total weight of the damping material, preferably between 0 and 6%.

8. Damping material according to one of the preceding claims wherein the bitumen is between 20 and 40% of the total weight of the damping material.

9. Damping material according to one of the preceding claims wherein the binder is between 45 and 70% of the total weight of the damping material.

10. Damping material according to claim 9, wherein the binder comprises between 1.5 and 6% of total weight of the damping material of at least one of fibres, a polymer, latex or synthetic rubber.

11. Constrained layer damping product, for the use in a constrained layer damping system, comprising at least a constraining layer and a constrained layer **characterised in that** the damping material for the constrained layer is according to one of the preceding claims.

12. Constrained layer damping product according to claim 11 with at least one additional adhesive layer.
